# EUROPEAN PATENT APPLICATION

(11) **EP 4 741 118 A1**
(43) Date of publication of application: **13.05.2026**
(21) Application number: 25187163.8
(22) Date of filing: 03.07.2025
(51) Int. Cl.: B26D 1/00, B26D 1/06, B26D 7/01, B65H 35/06

(54) **APPARATUS FOR MANUFACTURING SECONDARY BATTERY AND ELECTRODE PLATE CUTTING DEVICE FOR SECONDARY BATTERY**

(30) Priority: 06.11.2024 KR 20240156601
(71) Applicant: SAMSUNG SDI CO., LTD., Yongin-si, Gyeonggi-do 17084 (KR)
(72) Inventor: KWON, Junhwan, 17084 Yongin-si (KR); KIM, Jinhwan, 17084 Yongin-si (KR); IM, Jongmin, 17084 Yongin-si (KR); KANG, Bonggeun, 17084 Yongin-si (KR)
(74) Representative: Marks & Clerk LLP

(57) **Abstract**

An apparatus for manufacturing a secondary battery and an electrode plate cutting device that can prevent damage to a mixture portion or generation of foreign materials by expanding contact areas of a lower cutter and an upper cutter, thereby reducing concentration of a load. The apparatus includes a transfer part configured to move an electrode plate, which will be cut, along a transfer path, a winding part configured to wind the cut electrode plate transferred by the transfer part, and an electrode plate cutting device including an upper cutter installed above the transfer path of the electrode plate and a lower cutter installed below the electrode plate transfer path and cuts the electrode plate through cross motion with the upper cutter and in which a flat support portion configured to support the electrode plate is formed at an upper portion thereof.

## Description

### FIELD

The present disclosure relates to a cutting device for cutting an electrode plate of a secondary battery, and more specifically, to an apparatus for manufacturing a secondary battery and an electrode plate cutting device for a secondary battery.

### BACKGROUND

Different from primary batteries that are not designed to be charged, secondary batteries are designed to be discharged and recharged. A secondary battery may broadly include an electrode assembly consisting of a positive electrode plate, a separator, and a negative electrode plate, a case (or can) for accommodating the electrode assembly, a substrate tab formed by extending from an uncoated portion of each electrode plate of the electrode assembly, and an external terminal connected to the substrate tab.

Types of the electrode assembly accommodated in the case include a stacked type electrode assembly and a jelly-roll type electrode assembly. The jelly-roll type electrode assembly is manufactured by winding an electrode plate, which is continuously supplied, using a winding device.

The winding device includes an electrode plate cutting device. The electrode plate cutting device is a device for cutting the electrode plate at a designed length interval and includes an upper cutter and a lower cutter. However, the conventional electrode plate cutting device has a problem in that cracks occur in a mixture layer of the electrode plate due to concentration of a load transmitted to the electrode plate when the electrode plate is cut.

That is, when the electrode plate is cut, an upper cutter, a lower cutter, and a stripper simultaneously apply pressure to a local region of the electrode plate, causing cracks in the mixture layer due to stress concentration, and in severe cases, cracked parts fall and generate foreign materials. In particular, since an end point of a blade of the conventional lower cutter is in point contact with the electrode plate, a probability of damage to the mixture layer due to the herein-described stress concentration becomes higher. A cutting key with a structure for distributing a load applied to a mixture surface when the electrode plate is cut and preventing damage to the mixture layer is required.

The herein information disclosed in this Background section is for enhancement of understanding of the background of the present disclosure, and therefore, it may contain information that does not constitute a related (or prior) art.

### SUMMARY

The present disclosure is directed to providing an apparatus for manufacturing a secondary battery and an electrode plate cutting device for a secondary battery that can prevent damage to a mixture layer or generation of foreign materials by expanding a contact area of a lower cutter and an upper cutter on an electrode plate to reduce concentration of a load when the electrode plate is cut.

According to an aspect of the present disclosure, there is provided an apparatus for manufacturing a secondary battery, which includes a transfer part configured to move an electrode plate, which will be cut, along a transfer path, a winding part configured to wind the cut electrode plate transferred by the transfer part, and an electrode plate cutting device comprising an upper cutter installed above the transfer path of the electrode plate and a lower cutter installed below the electrode plate transfer path and cuts the electrode plate through cross motion with the upper cutter and in which a flat support portion configured to support the electrode plate is formed at an upper portion thereof.

According to another aspect of the present disclosure, there is provided an electrode plate cutting device for a secondary battery, which includes an upper cutter installed above a transfer path of an electrode plate moved along a transfer path, and a lower cutter installed below the transfer path and configured to cut the electrode plate through cross motion with the upper cutter, wherein a flat support portion, which comes into surface contact with the electrode plate and supports the electrode plate when the electrode plate is cut, is formed in the lower cutter.

A stripper may be installed on a side portion of the lower cutter to correspond to the upper cutter and configured to support the electrode plate when the electrode plate is cut, and an inner surface of the lower cutter may be formed on a surface facing the stripper of the lower cutter so as to be perpendicular to the flat support portion.

A curved surface, which comes into surface contact with a bottom surface of the electrode plate when the electrode plate is cut, may be formed between the flat support portion and the inner surface of the lower cutter.

A first inclined surface, which is inclined downwardly from the flat support portion toward the inner surface and comes into surface contact with the electrode plate when the electrode plate is cut, may be formed between the flat support portion and the inner surface.

An outer surface, which is parallel to the inner surface of the lower cutter, may be formed on a surface opposite to the inner surface of the lower cutter; and an inclined surface, e.g. second inclined surface, which is inclined downwardly from the flat support portion toward the outer surface, may be formed between the flat support portion and the outer surface.

A flat support portion, which supports the electrode plate while in surface contact with an upper surface of the electrode plate when the electrode plate is cut, may be formed on a bottom surface of the upper cutter.

An inner surface, which forms a right angle with the flat support portion formed on the bottom surface of the upper cutter, may be formed on one side surface of the upper cutter; and a curved surface, which comes into surface contact with the electrode plate when the electrode plate is cut, may be formed between the flat support portion formed on the bottom surface of the upper cutter and the inner surface formed on the bottom surface of the upper cutter.

An inner surface, which forms a right angle with the flat support portion, may be formed on one side surface of the upper cutter; and a first inclined surface, which is inclined upwardly from the flat support portion toward the inner surface and comes into surface contact with the electrode plate when the electrode plate is cut, may be formed between the flat support portion and the inner surface.

An outer surface, which is parallel to the inner surface, may be formed on a surface opposite to the inner surface of the upper cutter; and a second inclined surface may be further formed between the flat support portion and the outer surface.

At least some of the above and other features of the invention are set out in the claims.

Aspects and features of the present disclosure are not limited to those described herein, and other aspects and features not specifically mentioned herein will be clearly understood by those skilled in the art from the description of the present disclosure herein.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 is a schematic diagram illustrating an electrode assembly of a secondary battery that may be manufactured using an apparatus for manufacturing a secondary battery according to embodiments of the present disclosure;
FIG. 2 is a diagram illustrating an interior of a pouch-type battery to which the electrode assembly of FIG. 1 is applied;
FIG. 3 is a cross-sectional view illustrating a cylindrical battery that may be manufactured using the apparatus for manufacturing a secondary battery according to embodiments of the present disclosure;
FIG. 4 is a perspective view illustrating an exterior of a prismatic battery that may be manufactured using the apparatus for manufacturing a secondary battery according to embodiments of the present disclosure;
FIG. 5 is a cross-sectional view along line A-A of FIG. 4;
FIG. 6 is a schematic diagram illustrating the apparatus for manufacturing a secondary battery according to embodiments of the present disclosure;
FIG. 7 is a perspective view separately illustrating a lower cutter applied to an electrode plate cutting device of FIG. 6;
FIG. 8 is a front view illustrating the lower cutter of FIG. 7;
FIG. 9 is a diagram for describing a structural feature of the lower cutter shown in FIG. 7;
FIG. 10 is a diagram illustrating another example of the lower cutter applicable to the electrode plate cutting device according to embodiments of the present disclosure;
FIG. 11 is a diagram for describing a structure of the lower cutter shown in FIG. 10;
FIGS. 12A-12C are diagrams sequentially illustrating a cutting method of an electrode plate using the lower cutter of FIG. 10;
FIG. 13 is a diagram illustrating still another example of the lower cutter applicable to the electrode plate cutting device according to embodiments of the present disclosure;
FIG. 14 is a diagram illustrating a structural feature of the lower cutter shown in FIG. 13;
FIGS. 15A-15C are diagrams for describing a cutting method of an electrode plate using the lower cutter of FIG. 13;
FIG. 16 is a diagram illustrating a modified example of the apparatus for manufacturing a secondary battery according to embodiments of the present disclosure;
FIG. 17 is a side view illustrating a modified example of the upper cutter in the electrode plate cutting device shown in FIG. 16; and
FIG. 18 is a side view illustrating a modified example of the upper cutter shown in FIG. 16.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her disclosure in the best way. The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. The same reference numerals designate the same elements.

References to two compared elements, features, etc. as being "the same" may mean that they are "substantially the same." Thus, the phrase "substantially the same" may include a case having a deviation that is considered low in the art, for example, a deviation of 5% or less. In addition, uniformity of a parameter in a predetermined region may imply uniformity from an average perspective.

Although the terms first, second, and the like are used to describe various components, these components are substantially not limited by these terms. These terms are only used for distinguishing one component from another component, and unless otherwise stated, it is of course that a first component may also be a second component.

Throughout the specification, unless otherwise stated, each element may be singular or plural.

Arranging an arbitrary element "above (or below)" or "on (under)" another element may mean that the arbitrary element may contact the upper (or lower) surface of the element and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list.

Throughout the specification, if "A and/or B" is stated, it means A, B or A and B, unless otherwise stated and if "C to D" is stated, it means C or more and D or less, unless otherwise stated.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below.

The terminology used herein is for the purpose of describing embodiments of the present disclosure and is not intended to limit the present disclosure.

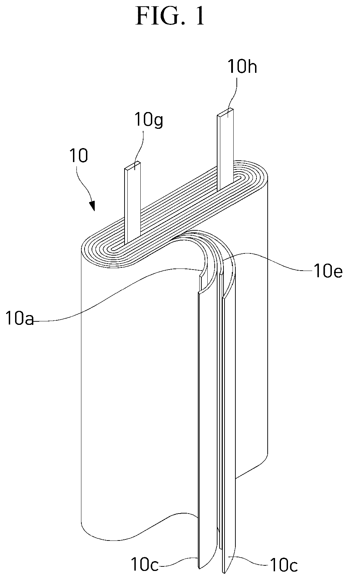

FIG. 1 is a schematic view illustrating an electrode assembly 10 of a secondary battery which may be manufactured by an apparatus 20 for manufacturing a secondary battery according to embodiments of the present disclosure.

An electrode assembly 10 may be formed by winding or stacking a first electrode plate 10a, a separator 10c, and a second electrode plate 10e, each of which are formed as thin plates or films.

**In** other embodiments, the electrode assembly 10 may be a stack type rather than a winding type, and the shape of the electrode assembly 10 is not limited in the present disclosure. **In** addition, the electrode assembly 10 may be a Z-stack electrode assembly in which a positive electrode plate and a negative electrode plate are inserted into both sides (e.g., opposite sides) of a separator, which is then bent (or folded) into a Z-stack

**In** addition, one or more electrode assemblies may be stacked (e.g., arranged) such that long sides of the electrode assemblies are adjacent to each other and accommodated in a case, and the number of electrode assemblies in a case is not limited in the present disclosure. The first electrode plate 10a of the electrode assembly 10 may act as a negative electrode, and the second electrode plate 10e may act as a positive electrode. Of course, the reverse is also possible.

The first electrode plate 10a may be formed by applying (e.g., coating or depositing) a first electrode active material, such as graphite or carbon, onto a first electrode substrate formed of a metal foil, such as copper, a copper alloy, nickel, or a nickel alloy. The first electrode plate 10a may include a first electrode tab 10g (e.g., a first uncoated portion), which is a region to which the first electrode active material is not applied. The first electrode tab 10g may be connected to an external first terminal. **In** some embodiments, when the first electrode plate 10a is manufactured, the first electrode tab 10g may be formed by being cut in advance to protrude to (or protrude from) one side of the electrode assembly 10, or the first electrode tab 10g may protrude to one side of the electrode assembly 10 more than (e.g., farther than or beyond) the separator 10c without being separately cut.

The second electrode plate 10e may be formed by applying (e.g., coating or depositing) a second electrode active material, such as a transition metal oxide, onto a second electrode substrate formed of a metal foil, such as aluminum or an aluminum alloy. The second electrode plate 10e may include a second electrode tab 10h (e.g., a second uncoated portion), which is a region to which the second electrode active material is not applied. The second electrode tab 10h may be connected to an external second terminal. In some embodiments, the second electrode tab 10h may be formed by being cut in advance to protrude to the other side (e.g., the opposite side) of the electrode assembly 10 when the second electrode plate 10e is manufactured, or the second electrode plate 10e may protrude to the other side of the electrode assembly more than (e.g., farther than or beyond) the separator 10c without being separately cut.

The separator 10c prevents a short-circuit between the first electrode plate 10a and the second electrode plate 10e while allowing movement of lithium ions therebetween. The separator 10c may be made of, for example, a polyethylene film, a polypropylene film, a polyethylene-polypropylene film, or the like.

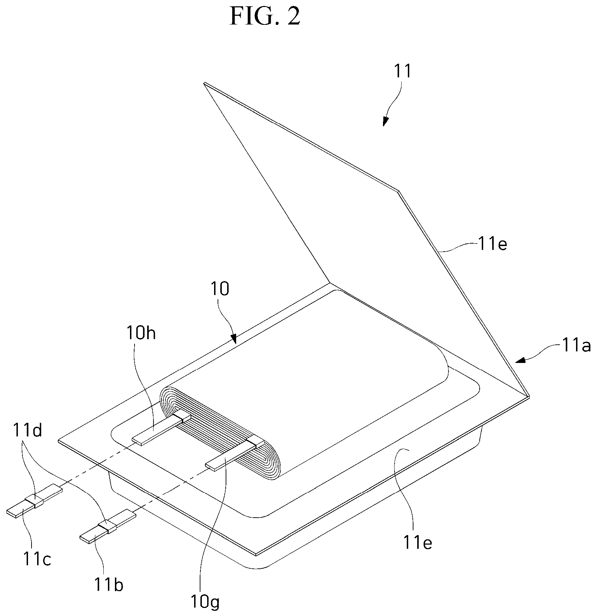

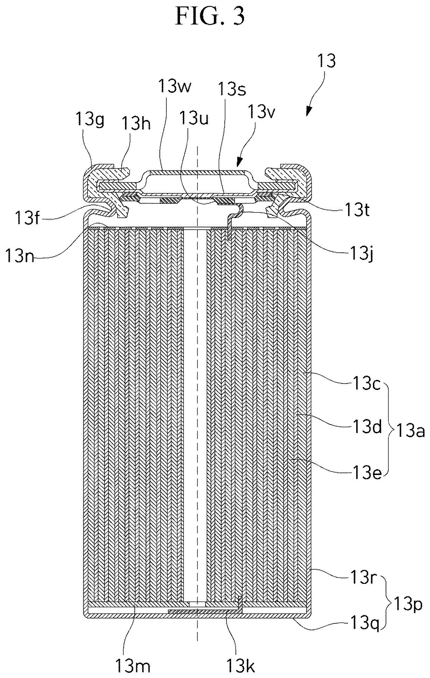

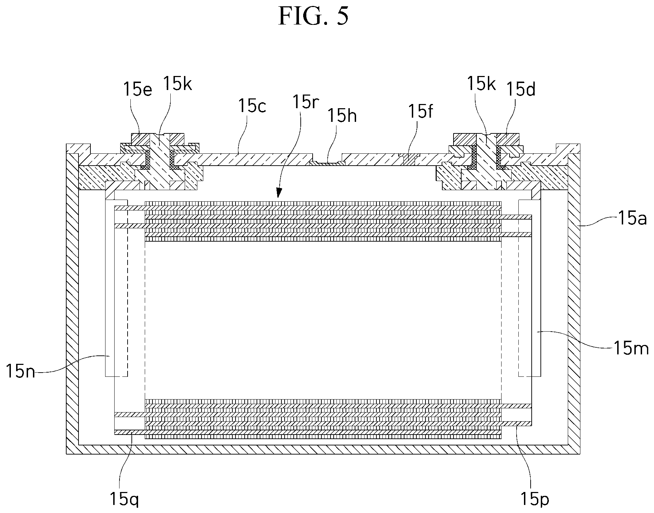

In some embodiments, the electrode assembly 10 may be accommodated in a case along with an electrolyte. In a pouch-type secondary battery, an electrode assembly 10 may be accommodated in a pouch made of flexible material (see, e.g., FIG. 2). In a cylindrical or prismatic secondary battery, an electrode assembly 10 may be accommodated in a cylindrical or prismatic metal casing (see, e.g., FIGS. 3 and 5).

A description is given of materials that can be used for the electrode plate of the herein electrode assembly.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X₃O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the herein formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x ≤ 2), a Si-based alloy, or a combination thereof.

The silicon-carbon composite may be a composite of silicon and amorphous carbon. According to embodiments, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particles and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

FIG. 2 is a view illustrating an interior of a pouch-type battery to which the electrode assembly 10 of FIG. 1 is applied.

The pouch-type secondary battery includes an electrode assembly 10 and a pouch 11a that accommodates the electrode assembly 10.

The electrode assembly 10 is the same as that illustrated in FIG. 1. The first electrode tab 10g and the second electrode tab 10h of the electrode assembly 10 may be electrically connected to respective external first and second terminal leads 11b and 11c by welding. Each of the first terminal lead 11b and the second terminal lead 11c may be attached with a tab film 11d for insulation from the pouch 11a.

The pouch 11a may be sealed by having sealing parts 11e at the edges thereof come into contact with each other with accommodating the electrode assembly 10 therein, in which case the sealing may be achieved with the tab film 11d interposed between the sealing parts 11e. The sealing parts 11e of the pouch 11a may each be made of a thermal fusion material that generally has weak adhesion to metal. Thus, it may be fused to the pouch 11a by interposing the thin tab film 11d between the sealing parts 11e.

FIG. 3 is a cross-sectional view illustrating a cylindrical battery 13 manufactured by the apparatus 20 for manufacturing a secondary battery according to embodiments of the present disclosure.

The cylindrical battery 13 includes an electrode assembly 13a, a case 13p accommodating the electrode assembly 13a and an electrolyte therein, a cap assembly 13v coupled to an opening of the case 13p to seal the case 13p, and an insulating plate 13n positioned between the electrode assembly 13a and the cap assembly 13v inside the case.

The electrode assembly 13a may include a separator 13d and a first electrode 13c and a second electrode 13e positioned with the separator interposed therebetween and may be wound in a jelly-roll shape.

The first electrode 13c includes a first substrate and a first active material layer on the first substrate. A first lead tab 13j may extend outwardly from a first uncoated portion of the first substrate at where the first active material layer is not located, and the first lead tab 13j may be electrically connected to the cap assembly 13v.

The second electrode 13e includes a second substrate and a second active material layer on the second substrate. A second lead tab 13k may extend outwardly from a second uncoated portion of the second substrate at where the second active material layer is not located, and the second lead tab 13k may be electrically connected to the case 10. The first lead tab 13j and the second lead tab 13k may extend in opposite directions.

The first electrode 13c may act as a positive electrode. In such an embodiment, the first substrate may be made of, for example, an aluminum foil, and the first active material layer may include, for example, a transition metal oxide. The second electrode 13e may act as a negative electrode. In such an embodiment, the second substrate may be made of, for example, a copper foil or a nickel foil, and the second active material layer may include graphite, for example.

The separator 13d prevents a short circuit between the first electrode 13c and the second electrode 13e while allowing movement of lithium ions therebetween. The separator 13d may be made of, for example, a polyethylene film, a polypropylene film, a polyethylene-polypropylene film, or the like.

The case 13p accommodates the electrode assembly 13a and, together with the cap assembly 13v, forms the external appearance of the secondary battery. The case 13p may have a substantially cylindrical body portion 13r and a bottom portion 13q connected to one side (e.g., to one end) of the body portion 13r. A beading part 13f (e.g., a bead) deformed inwardly may be formed in the body portion 13r, and a crimping part 13g (e.g., a crimp) bent inwardly may be formed at an open end of the body portion 13r.

The beading part 13f can reduce or prevent movement of the electrode assembly 13a inside the case 13p and can facilitate seating of the gasket 13h and the cap assembly 13v. The crimping part 13g may firmly fix the cap assembly 13v by pressing the edge of the cap assembly 13v against the gasket 13h. The case 13p may be formed of steel plated with nickel, for example.

The cap assembly 13v may be fixed to the inside of the crimping part 13g by the gasket 13h to seal the case 13p. The cap assembly 13v may include a cap up 13w, a safety vent 13s, a cap down 13t, an insulating member, and a subplate 13u, but is not limited to these examples and may be modified in various ways.

The cap up 13w may be positioned at the uppermost part of the cap assembly 13v. The cap up 13w may include a terminal part that protrudes upwardly and is connected to an external circuit, and an outlet for discharging gas may be arranged around the terminal part.

The safety vent 13s may be located under the cap up 13w. The safety vent 13s may include a protrusion part that protrudes convexly downwardly and is connected to the sub plate 13u, and at least one notch may be formed in the safety vent around the protrusion part.

When gas is generated due to overcharging or abnormal operation of the secondary battery, the protrusion part is deformed upwardly by the pressure and separates from the sub plate 13u while the safety vent 13s is cut (e.g., bursts or tears) along the notch. The cut safety vent 13s may prevent the secondary battery from exploding by allowing for the gas to be discharged to the outside.

The cap down 13t may be below the safety vent 13s. The cap down 13t may have a first opening for exposing the protrusion part of the safety vent 13s and a second opening for gas discharge. The insulating member may be positioned between the safety vent 13s and the cap down 13t to insulate the safety vent 13s and the cap down 13t.

The sub plate 13u may be under the cap down 13t. The sub plate 13u may be fixed to a lower surface of the cap down 13t to block the first opening of the cap down 13t, and the protrusion part of the safety vent 13s may be fixed to the sub plate 13u. The first lead tab 13j, which is drawn out from the electrode assembly 13a, may be fixed to the sub plate 13u. Accordingly, the cap up 13w, the safety vent 13s , the cap down 13t, and the sub plate 13u may be electrically connected to the first electrode 13c of the electrode assembly 13a.

The insulating plate 13n may be positioned to be in contact with the electrode assembly 13a below the beading part 13. The insulating plate 13n may have a tab opening through which the first lead tab 13j is drawn out. The cap assembly 13v, which is electrically connected to the first electrode 13c by the first lead tab 13j, may face the electrode assembly 13a with the insulating plate 13n interposed therebetween and may maintain a state of being insulated (e.g., electrically insulated) from the electrode assembly 13a by the insulating plate. Meanwhile, another insulating plate 13m may be included for insulation between the electrode assembly 13a and the bottom portion 13q of the case 13p.

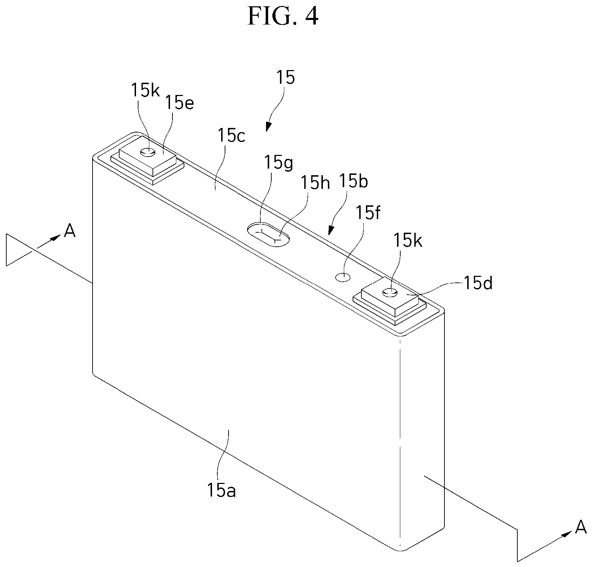

FIG. 4 is a perspective view illustrating an exterior of a prismatic battery which may be manufactured by the apparatus 20 for manufacturing a secondary battery according to embodiments of the present disclosure.

A case 15a forms the overall appearance of a prismatic battery and may be formed of a conductive metal such as aluminum, aluminum alloy, or nickel-plated steel. **In** addition, the case 15a may provide a space for accommodating an electrode assembly therein.

A cap assembly 15b may include a cap plate 15c that covers the opening of the case 15a. In some examples, the case 15a and the cap plate 15c may be made of a conductive material. Here, a first terminal 15d and a second terminal 15e may be electrically connected to respective positive and negative (or negative and positive) electrodes inside the case, and may be installed to protrude outward through the cap plate 15c.

An electrolyte inlet 15f may be formed in the cap plate 15c, a gas discharge hole 15g may be opened, and a vent, i.e., a gas discharge device 15h may be connected to the gas discharge hole 15g. The gas discharge device 15h is opened by gas generated inside the battery and performs a degassing function.

FIG. 5 is a cross-sectional view along line A-A in FIG. 4.

An electrode assembly 13a may be formed by winding or stacking a first electrode plate, a separator, and a second electrode plate. When the electrode assembly 15r is a wound type, a winding axis may be parallel to the longitudinal direction of the case. In some other embodiments, the electrode assembly 15r is a stack type rather than a winding type. The shape of the electrode assembly 15r is not limited in the present disclosure.

In addition, the electrode assembly 15r may be a Z-stack electrode assembly in which a positive electrode plate and a negative electrode plate are inserted into both sides of a separator, which is then bent into a Z-stack. In addition, one or more electrode assemblies 15r may be stacked such that long sides of the electrode assemblies are adjacent to each other and accommodated in the case, and the number of electrode assemblies in the case is not limited in the present disclosure. The first electrode plate of the electrode assembly 15r may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 43 (e.g., a first uncoated portion) that is a region to which the first electrode active material is not applied. The first electrode tab 15p may act as a current flow path between the first electrode plate and the first current collector 15m. In some embodiments, when the first electrode plate is manufactured, the first electrode tab 15p is formed by being cut in advance to protrude to one side of the electrode assembly, or the first electrode tab protrudes to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 15q (e.g., a second uncoated portion) that is a region to which the second electrode active material is not applied. The second electrode tab 15q may act as a current flow path between the second electrode plate and the second current collector 15n. In some embodiments, the second electrode tab 15q may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

In FIG. 5, the first electrode tab 15p and the second electrode tab 15q are illustrated as being positioned on the right side and the left side of the electrode assembly 15r, respectively. However, in some other embodiments, both the first electrode tab 15p and the second electrode tab 15q may be positioned together on the right side or the left side of the electrode assembly 15r.

Here, the left side and the right side of the electrode assembly 15r are based on the battery illustrated in FIG. 5 for convenience of explanation. The left side refers to the side of the vertical surface of the electrode assembly 15r to which the second current collector 15n is joined, and the right side refers to the opposite side to which the first current collector 15m is joined. Therefore, the terms "left side" and "right side" of the electrode assembly 15r used herein may vary when the battery rotates left and right or up and down.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, an electrode assembly 15r is accommodated in the case 15a along with an electrolyte.

In the electrode assembly 15r, the first current collector 15m and the second current collector 15n may be welded and connected to the first electrode tab 15p extending from the first electrode plate and the second electrode tab 15q extending from the second electrode plate, respectively.

As illustrated in FIG. 5, the first current collector 15m and the second current collector 15n are connected to the first terminal 15d and the second terminal 15e through connection members 15k, respectively. In some embodiments, the connection members 15k may each have an outer peripheral surface that is threaded, and may be fastened to the first terminal 15d and the second terminal 15e by screwing. However, the present disclosure is not limited thereto. For example, the connection members 15k may also be coupled to the first terminal 15d and the second terminal 15e by riveting or welding.

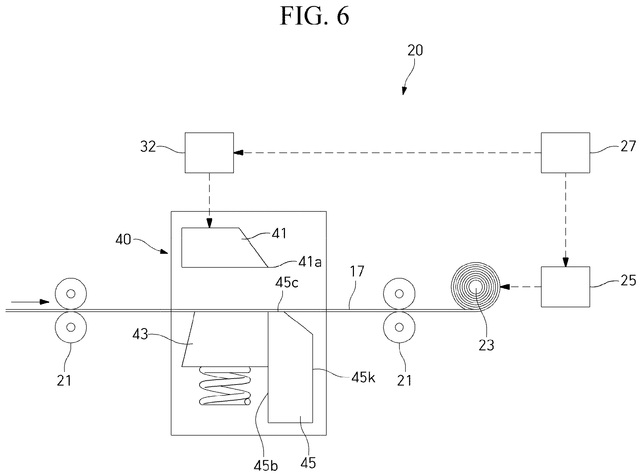

FIG. 6 is a schematic diagram illustrating the apparatus 20 for manufacturing a secondary battery according to embodiments of the present disclosure.

As shown in the drawing, the apparatus 20 for manufacturing a secondary battery according to the present embodiment may include a transfer part, a winding part 23, a winding part driver 25, a controller 27, and an electrode plate cutting device 40.

The transfer part may move an electrode plate 17, which will be cut, along a predetermined transfer path. The transfer part may include a plurality of transfer rollers 21. Some of the transfer rollers 21 are rollers having driving forces, and the remaining transfer rollers 21 do not have driving forces and may only serve to support the transfer rollers tautly.

The electrode plate 17 has a predetermined width and is a stacked body made of a base material and a composite material. The electrode plate 17 may be continuously transferred along the transfer path provided by the transfer part and wound on the winding part 23. The electrode plate 17 may be either a negative electrode plate or a positive electrode plate.

The winding part 23 may be rotated by power received from the winding part driver 25 and wind the electrode plate 17 thereon. The electrode plate 17 wound on the winding part 23 may be unloaded by a worker and sent to a subsequent process. The winding part 23 may include a winding turret for winding the electrode plate 17.

The winding part driver 25 may be controlled by the controller 27. The winding part driver 25 may be operated in response to a control signal of the controller 27 to rotate or not rotate the winding part 23.

The controller 27 may control turning on/off and a rotation speed of the winding part driver 25. In addition, the controller 27 transmits a control signal to an upper cutter driving unit 32 to cause the upper cutter driving unit 32 to move an upper cutter 31 down, thereby cutting the electrode plate 17 through cross motion of the upper cutter 31 and a lower cutter 34.

Meanwhile, the electrode plate cutting device 40 may include an upper cutter 41, a lower cutter 45, and a stripper 43.

The upper cutter 41 is a cutting blade with a blade 41a formed on one side of a lower end portion and may be installed to ascend and descend above the transfer path of the electrode plate 17. An ascending/descending movement of the upper cutter 41 may be implemented by the upper cutter driving unit 32. In addition, the lower cutter 45 is positioned below the transfer path of the electrode plate 17 and may have a blade 45a on one side of an upper end portion. The lower cutter 45 may cut the electrode plate 17 through cross motion with the upper cutter 41.

In addition, a stripper 43 may be provided on a side portion of the lower cutter 45. The stripper 43 corresponds to the upper cutter 41 (e.g., aligned with the upper cutter 41) and may elastically support the electrode plate 17 when the electrode plate 17 is cut.

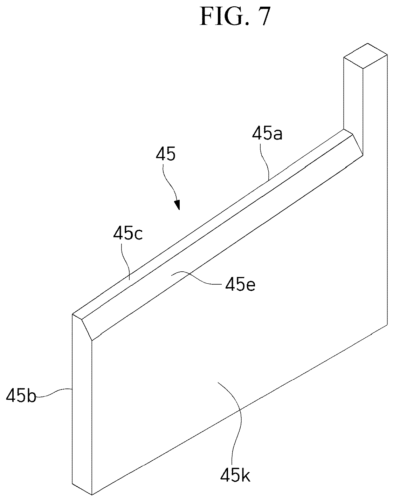

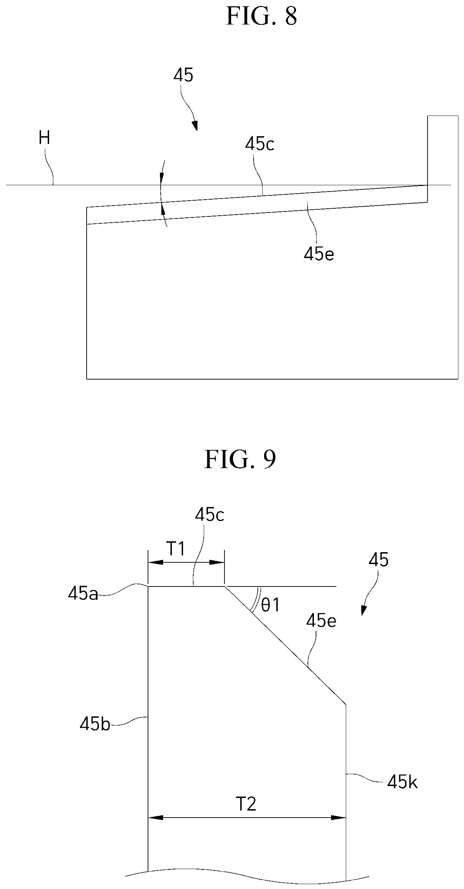

FIG. 7 is a perspective view separately illustrating the lower cutter 45 applied to the electrode plate cutting device 40 of FIG. 6, and FIG. 8 is a front view illustrating the lower cutter of FIG. 7.

The lower cutter 45 has a plate shape with a predetermined thickness and may include an inner surface 45b and an outer surface 45k. The inner surface 45b is a surface facing the stripper 43. In addition, the outer surface 45k is a surface opposite to the inner surface 45b and may be parallel to the inner surface 45b. An imaginary plane including the inner surface 45b and the outer surface 45k may be orthogonal to the electrode plate 17.

In addition, a blade 45a, a flat support portion 45c, and a second inclined surface 45e may be formed at an upper end portion of the lower cutter 45. When the electrode plate 17 is cut, the flat support portion 45c may come into surface contact with a bottom surface of the electrode plate 17 to support the electrode plate 17 upwardly.

When the electrode plate 17 is cut, the flat support portion 45c serves to reduce local stress concentration applied to the electrode plate. The flat support portion 45c may be perpendicular to the inner surface 45b.

If the flat support portion 45c is omitted and the electrode plate 17 is cut, since the bottom surface of the electrode plate 17 comes into line or point contact with the lower cutter 45, stress is concentrated and thus a mixture material may be easily damaged and separated. However, when the flat support portion 45c is applied, since the electrode plate 17 comes into surface contact with the lower cutter 45 during cutting, a load burden on the electrode plate 17 is significantly reduced to prevent damage to the mixture material. The flat support portion 45c may have an inclined shape with respect to a plane H of FIG. 8 including the electrode plate 17.

The blade 45a is a blade formed between the flat support portion 45c and the inner surface 45b. The blade 45a may perform cross motion with the blade 41a of the upper cutter 41 to cut the electrode plate 17.

In addition, the second inclined surface 45e is an inclined surface positioned between the flat support portion 45c and the outer surface 45k. The second inclined surface 45e may have an inclined shape downwardly from the flat support portion 45c toward the outer surface 45k.

FIG. 9 is a partial side cross-sectional view for describing a structural feature of the lower cutter 45 shown in FIG. 7.

A thickness T1 of the flat support portion 45c may be 1.5 mm or less. In addition, a thickness T2 between the inner surface 45b and the outer surface 45k may be 5 mm or less. In addition, an inclined angle θ1 of the second inclined surface 45e with respect to the plane including the flat support portion 45c may be 90 degrees or less. In addition, a ratio (T1/T2* 100) of the thickness T1 of the flat support portion to the thickness of the lower cutter 45, i.e., the thickness T2 between the inner surface and the outer surface, may range from 10 % to 40 %.

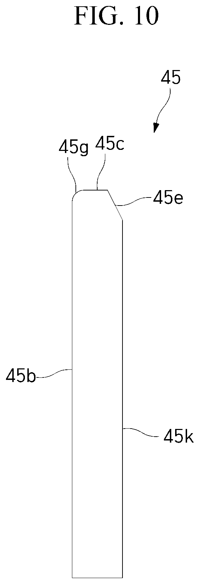

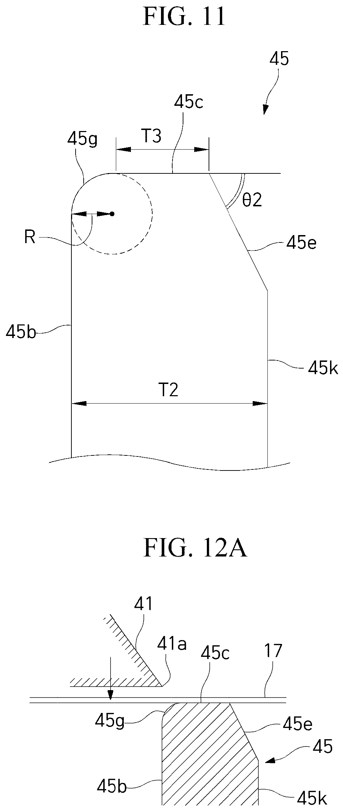

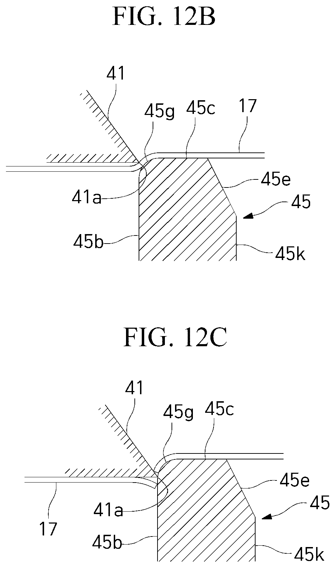

FIG. 10 is a diagram illustrating another example of the lower cutter 45 applicable to the electrode plate cutting device 40 according to embodiments of the present disclosure, and FIG. 11 is a diagram for describing a structure of the lower cutter 45 shown in FIG. 10. In addition, FIGS. 12A-C are diagrams sequentially illustrating a cutting operation of the electrode plate 17 using the lower cutter of FIG. 10.

As shown in the drawings, a curved surface 45g may be formed between the flat support portion 45c and the inner surface 45b. The curved surface has a predetermined curvature and may connect the flat support portion 45c and the inner surface 45b. There is no step difference between the curved surface 45g and the flat support portion 45c or between the curved surface 45g and the inner surface 45b, and they are smoothly connected.

As shown in FIGS. 12A-C, the curved surface 45g may come into surface contact with the bottom surface of the electrode plate 17 when the electrode plate 17 is cut. FIG. 12A shows that the upper cutter 41 descends. The upper cutter 41 pressurizes downwardly against the electrode plate 17 while descending. Accordingly, the electrode plate 17 may be pressed by the blade 41a, brought into close contact with the curved surface 45g, and then cut at a point where the curved surface 45g and the inner surface 45b meet due to the continuous descending of the blade 41a. In this way, since the curved surface 45g is applied to the lower cutter, a phenomenon of damage to the mixture portion due to stress concentration does not occur at least in the bottom surface of the electrode plate 17 during the cutting.

The thickness T2 of the lower cutter 45 may be about 5 mm or less, and a turning radius R of the curved surface 45g may be about 2 mm or less. In addition, a composite step difference ratio (T3/T2 * 100) may range from 10% to 45%, and an inflection ratio (R/T2 * 100) may be 45% or less. In addition, an angle θ2 between the second inclined surface 45e and the plane including the flat support portion 45c may be 90 degrees or less.

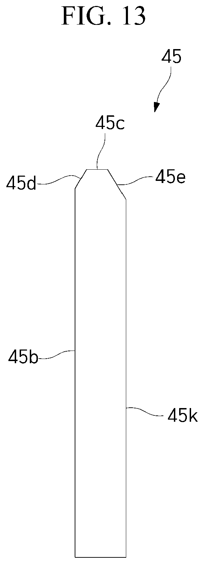

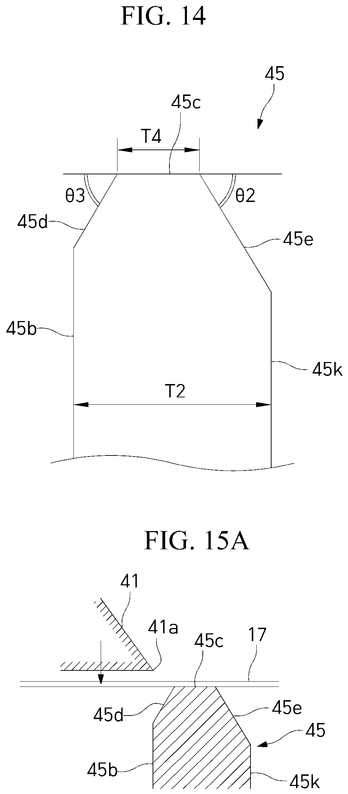

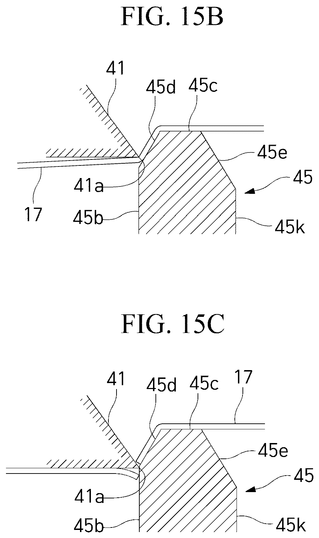

FIG. 13 is a diagram illustrating still another example of the lower cutter 45 applicable to the electrode plate cutting device 40 according to embodiments of the present disclosure, FIG. 14 is a diagram illustrating a structural feature of the lower cutter shown in FIG. 13, and FIGS. 15A-15C are diagrams sequentially illustrating a cutting operation of the electrode plate 17 using the lower cutter of FIG. 13.

As shown in the drawings, a first inclined surface 45d may be applied between the flat support portion 45c and the inner surface 45b. The first inclined surface 45d is a downwardly inclined surface from the flat support portion 45c toward the inner surface 45b and, as shown in FIGS. 15A-15C may come into surface contact with the bottom surface of the electrode plate 17 when the electrode plate 17 is cut.

As shown in FIGS. 15A to 15C, the descending upper cutter 41 meets the electrode plate 17 and begins to pressurize downwardly against the electrode plate 17. Thus, the electrode plate 17 may be pressed against the blade 41a and brought into close contact with the first inclined surface 45d. In this state, as the upper cutter 41 continues to descend, the electrode plate 17 may be cut at a point where the first inclined surface 45d and the inner surface 45b meet. Since the first inclined surface 45d is applied to the lower cutter, a phenomenon of damage to the mixture portion due to stress concentration does not occur in the bottom surface of the electrode plate 17 during the cutting.

A thickness T2 of the lower cutter 45 with the herein configuration may be about 5 mm or less, and a thickness T4 of the flat support portion 45c may be about 1.5 mm or less. In addition, an angle θ3 between the first inclined surface 45d and the plane including the flat support portion 45c may be 65 degrees or less, and an angle θ2 between the second inclined surface 45e and the plane including the flat support portion 45c may be 90 degrees or less.

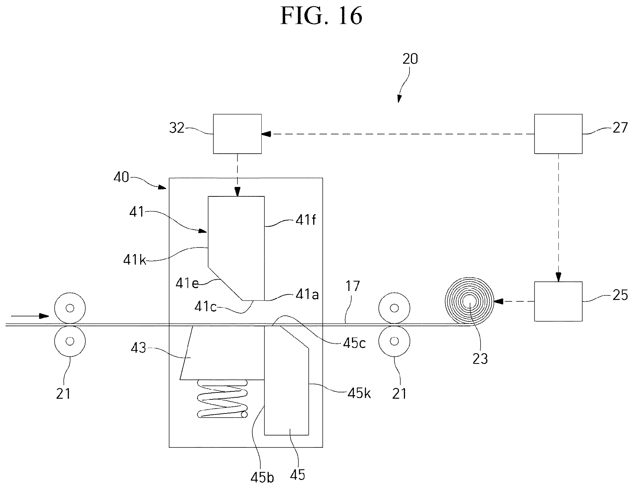

FIG. 16 is a diagram illustrating a modified example of the apparatus 20 for manufacturing a secondary battery according to embodiments of the present disclosure.

A flat support portion 41c, a second inclined surface 41e, an inner surface 41f, and an outer surface 41k may be formed in the upper cutter 41 of the apparatus 20 for manufacturing a secondary battery shown in FIG. 16. The flat support portion 41c may be formed on bottom surface of the upper cutter 41. The inner surface 41f may form a right angle with the flat support portion 41c and may be formed on one side surface of the upper cutter 41.

The flat support portion 41c is a surface supporting the electrode plate downwardly while in surface contact with the upper surface of the electrode plate 17 when the electrode plate 17 is cut. In addition, the inner surface 41f is a plane corresponding to the inner surface 45b (e.g., aligned with the inner surface 45b) of the lower cutter 45 and may have a blade 41a at a lower end. The outer surface 41k may be a plane spaced a predetermined distance from the inner surface 41f. The outer surface 41k may be parallel to the inner surface 41f, and may be formed on a surface opposite to the inner surface 41f of the upper cutter 41.

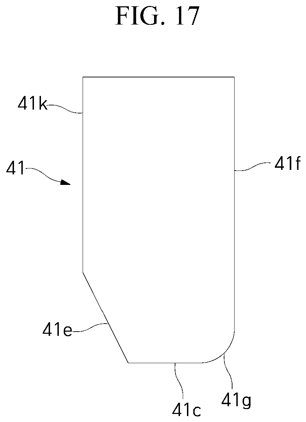

FIG. 17 is a side view illustrating a modified example of the upper cutter 41 in the electrode plate cutting device 40 shown in FIG. 16.

As shown in the drawing, a curved surface 41g may be formed between the inner surface 41f and the flat support portion 41c. When the electrode plate 17 is cut, the curved surface 41g may come into surface contact with the upper surface of the electrode plate 17 to reduce stress concentration on the electrode plate 17. The curved surface 41g of the upper cutter may play the same role as the curved surface of the lower cutter.

In addition, the second inclined surface 41e may be formed between the flat support portion 41c and the outer surface 41k. The second inclined surface 41e is an inclined surface connecting the flat support portion 41c and the outer surface 41k. Sizes of the flat support portion 41c and the curved surface 41g of the upper cutter 41 shown in FIG. 17 may be the same as or different from those of the flat support portion and the curved surface of the lower cutter.

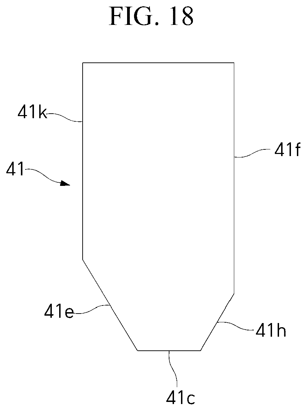

FIG. 18 is a side view illustrating still another modified example of the upper cutter 41 shown in FIG. 16.

As shown in the drawing, a first inclined surface 41h may be formed between the flat support portion 41c and the inner surface 41f. The first inclined surface 41h is an inclined surface that is inclined upwardly from the flat support portion 41c toward the inner surface 41f and may come into surface contact with the electrode plate when the electrode plate is cut. In addition, the second inclined surface 41e may be formed between the flat support portion 41c and the outer surface 41k. The second inclined surface 41e is an upwardly inclined surface from the flat support portion 41c toward the outer surface 41k. A thickness of the flat support portion 41c and inclined angles of the first and second inclined surfaces 41h and 41e of the upper cutter 41 of FIG. 18 may be the same as or different from those of the lower cutter shown in FIG. 13.

According to an apparatus for manufacturing a secondary battery and an electrode plate cutting device for a secondary battery of the present disclosure, which are formed as described herein, when an electrode plate is cut, damage to a mixture portion or generation of foreign materials can be prevented by expanding contact areas of a lower cutter and an upper cutter with respect to the electrode plate to reduce concentration of a load.

Embodiments are set out in the following clauses.

Clause 1. An apparatus for manufacturing a secondary battery, comprising: a transfer part configured to move an electrode plate, which will be cut, along a transfer path; a winding part configured to wind the cut electrode plate transferred by the transfer part; and an electrode plate cutting device comprising an upper cutter installed above the transfer path of the electrode plate and a lower cutter installed below the electrode plate transfer path and cuts the electrode plate through cross motion with the upper cutter and in which a flat support portion configured to support the electrode plate is formed at an upper portion thereof.

Clause 2. The apparatus of Clause 1, wherein a stripper is installed on a side portion of the lower cutter to correspond to the upper cutter and to support the electrode plate when the electrode plate is cut, and an inner surface of the lower cutter is formed on a surface facing the stripper of the lower cutter to be perpendicular to the flat support portion.

Clause 3. The apparatus of Clause 2, wherein any one of a curved surface, which comes into surface contact with a bottom surface of the electrode plate when the electrode plate is cut, and a first inclined surface, which is inclined downwardly from the flat support portion toward the inner surface and comes into surface contact with the electrode plate when the electrode plate is cut, is formed between the flat support portion and the inner surface.

Clause 4. The apparatus of Clause 2, wherein: an outer surface, which is parallel to the inner surface, is formed on a surface opposite to the inner surface of the lower cutter; and a second inclined surface, which is inclined downwardly from the flat support portion toward the outer surface, is formed between the flat support portion and the outer surface.

Clause 5. The apparatus of Clause 1, wherein a flat support portion, which supports the electrode plate while in surface contact with an upper surface of the electrode plate when the electrode plate is cut, is formed on a bottom surface of the upper cutter.

Clause 6. The apparatus of Clause 5, wherein: an inner surface, which forms a right angle with the flat support portion, is formed on one side surface of the upper cutter; and any one of a curved surface, which comes into surface contact with the electrode plate when the electrode plate is cut, and a first inclined surface, which is inclined downwardly from the flat support portion toward the inner surface and comes into surface contact with the electrode plate when the electrode plate is cut, is formed between the flat support portion and the inner surface.

Clause 7. An electrode plate cutting device for a secondary battery, comprising: an upper cutter installed above a transfer path of an electrode plate moved along a transfer path; and a lower cutter installed below the transfer path and configured to cut the electrode plate through cross motion with the upper cutter, wherein a flat support portion, which comes into surface contact with the electrode plate and supports the electrode plate when the electrode plate is cut, is formed in the lower cutter.

Clause 8. The electrode plate cutting device of Clause 7, wherein a stripper is installed on a side portion of the lower cutter to correspond to the upper cutter and to support the electrode plate when the electrode plate is cut, and an inner surface of the lower cutter is formed on a surface facing the stripper of the lower cutter to be perpendicular to the flat support portion.

Clause 9. The electrode plate cutting device of Clause 8, wherein a curved surface, which comes into surface contact with a bottom surface of the electrode plate when the electrode plate is cut, is formed between the flat support portion and the inner surface.

Clause 10. The electrode plate cutting device of Clause 7, wherein: an outer surface, which is parallel to the inner surface, is formed on a surface opposite to the inner surface of the lower cutter; and a second inclined surface, which is inclined downwardly from the flat support portion toward the outer surface, is formed between the flat support portion and the outer surface.

Clause 11. The electrode plate cutting device of Clause 8, wherein a first inclined surface, which is inclined downwardly from the flat support portion toward the inner surface and comes into surface contact with the electrode plate when the electrode plate is cut, is formed between the flat support portion and the inner surface.

Clause 12. The electrode plate cutting device of Clause 7, wherein a flat support portion, which supports the electrode plate while in surface contact with an upper surface of the electrode plate when the electrode plate is cut, is formed on a bottom surface of the upper cutter.

Clause 13. The electrode plate cutting device of Clause 12, wherein: an inner surface, which forms a right angle with the flat support portion, is formed on one side surface of the upper cutter; and a curved surface, which comes into surface contact with the electrode plate when the electrode plate is cut, is formed between the flat support portion and the inner surface.

Clause 14. The electrode plate cutting device of Clause 7, wherein: an inner surface, which forms a right angle with the flat support portion, is formed on one side surface of the upper cutter; and a first inclined surface, which is inclined upwardly from the flat support portion toward the inner surface and comes into surface contact with the electrode plate when the electrode plate is cut, is formed between the flat support portion and the inner surface.

Clause 15. The electrode plate cutting device of Clause 14, wherein: an outer surface, which is parallel to the inner surface, is formed on a surface opposite to the inner surface of the upper cutter; and a second inclined surface is further formed between the flat support portion and the outer surface.

Although the present disclosure has been described herein with respect to embodiments thereof, the present disclosure is not limited thereto. Various modifications and variations can be made thereto by those skilled in the art within the scope of the present disclosure as defined by the appended claims and their equivalents.

## Claims

1. An electrode plate cutting device for a secondary battery, comprising:
an upper cutter installed above a transfer path of an electrode plate moved along a transfer path; and
a lower cutter installed below the transfer path and configured to cut the electrode plate through cross motion with the upper cutter,
wherein a flat support portion, which comes into surface contact with the electrode plate and supports the electrode plate when the electrode plate is cut, is formed in the lower cutter.

2. The electrode plate cutting device as claimed in claim 1, wherein a stripper is installed on a side portion of the lower cutter to correspond to the upper cutter and configured to support the electrode plate when the electrode plate is cut, and wherein an inner surface of the lower cutter is formed on a surface facing the stripper of the lower cutter so as to be perpendicular to the flat support portion.

3. The electrode plate cutting device as claimed in claim 2, wherein a curved surface, which comes into surface contact with a bottom surface of the electrode plate when the electrode plate is cut, is formed between the flat support portion and the inner surface of the lower cutter.

4. The electrode plate cutting device as claimed in claim 2 or 3, wherein a first inclined surface, which is inclined downwardly from the flat support portion toward the inner surface and comes into surface contact with the electrode plate when the electrode plate is cut, is formed between the flat support portion and the inner surface.

5. The electrode plate cutting device as claimed in claim 2, 3 or 4, wherein:
an outer surface, which is parallel to the inner surface of the lower cutter, is formed on a surface opposite to the inner surface of the lower cutter; and
an inclined surface, which is inclined downwardly from the flat support portion toward the outer surface, is formed between the flat support portion and the outer surface.

6. The electrode plate cutting device as claimed in any preceding claim, wherein a flat support portion, which supports the electrode plate while in surface contact with an upper surface of the electrode plate when the electrode plate is cut, is formed on a bottom surface of the upper cutter.

7. The electrode plate cutting device as claimed in claim 6, wherein:
an inner surface, which forms a right angle with the flat support portion formed on the bottom surface of the upper cutter, is formed on one side surface of the upper cutter; and
a curved surface, which comes into surface contact with the electrode plate when the electrode plate is cut, is formed between the flat support portion formed on the bottom surface of the upper cutter and the inner surface formed on the bottom surface of the upper cutter.

8. The electrode plate cutting device as claimed in any one of claims 1 to 5, wherein:
an inner surface, which forms a right angle with the flat support portion, is formed on one side surface of the upper cutter; and
a first inclined surface, which is inclined upwardly from the flat support portion toward the inner surface and comes into surface contact with the electrode plate when the electrode plate is cut, is formed between the flat support portion and the inner surface.

9. The electrode plate cutting device as claimed in claim 8, wherein:
an outer surface, which is parallel to the inner surface, is formed on a surface opposite to the inner surface of the upper cutter; and
a second inclined surface is further formed between the flat support portion and the outer surface.

10. An apparatus for manufacturing a secondary battery, comprising:
a transfer part configured to move an electrode plate, which will be cut, along a transfer path;
a winding part configured to wind the cut electrode plate transferred by the transfer part; and
the electrode plate cutting device according to any preceding claim.
